# FASCICULE DE BREVET EUROPEEN

(11) **EP 2 112 756 B1**
(45) Date de publication et mention de la délivrance du brevet: **04.01.2012**
(21) Numéro de dépôt: 09158378.1
(22) Date de dépôt: 21.04.2009
(51) Int. Cl.: H02M 1/08, H02M 3/335

(54) **Dispositif de génération d'une tension d'entree regulée d'une unité électrique**
Vorrichtung zur Erzeugung einer geregelten Eingangsspannung einer elektrischen Einheit
Device for generating a regulated input voltage of an electric unit

(30) Priorité: 21.04.2008 FR 0852686
(43) Date de publication de la demande: 28.10.2009
(73) Titulaire: Valeo Etudes Electroniques, 94042 Créteil Cédex (FR)
(72) Inventeur: Sardat, Pierre, 93250 Villemomble (FR)
(74) Mandataire: Cardon, Nicolas

(56) Documents cités:
- SU-A1- 1 661 938
- US-A1- 2008 037 296

## Description

La présente invention concerne le domaine technique des dispositifs de génération de tension régulée d'alimentation électrique d'un organe électrique à partir d'une tension d'une source d'alimentation électrique telle qu'une batterie d'un véhicule automobile.

En général, la tension fournie par la batterie d'un véhicule automobile est susceptible de varier et risque d'endommager les organes électriques du réseau d'alimentation. Il est alors nécessaire de prévoir un dispositif de génération d'une tension régulée à partir de la tension de la source.

Un dispositif connu comprend une alimentation à découpage du type à convertisseur « flyback ».

De façon classique, un tel dispositif comprend :
- un transformateur de stockage d'énergie comprenant des enroulement primaire et secondaire couplés magnétiquement entre eux,
- un circuit primaire reliant la source d'alimentation à une masse, comprenant l'enroulement primaire et un interrupteur statique principal montés en série,
- un circuit secondaire, destiné à être relié à une charge, comprenant l'enroulement secondaire.
le document SU1661938 divulgue un convertisseur "flyback" comportant les caractéristiques du préambule de la revendication 1.

Généralement, un tel dispositif fonctionne de manière cyclique à une fréquence prédéterminée, dite « fréquence de découpage ». En particulier, chaque cycle se décompose en deux phases, une phase de stockage d'énergie magnétique, dite encore « phase d'entrée » au cours de laquelle l'interrupteur principal est dans l'état fermé, et une phase de restitution de l'énergie magnétique, dite également « phase de sortie », au cours de laquelle l'interrupteur principal est dans l'état ouvert.

Le circuit secondaire comprend généralement un élément de redressement monté en série avec l'enroulement secondaire et un élément capacitif monté en parallèle avec l'enroulement secondaire et l'élément de redressement et destiné à fournir à ses bornes la tension de sortie régulée.

Au cours de la phase d'entrée, la fermeture de l'interrupteur permet l'application de la tension d'entrée à l'enroulement primaire, l'apparition d'un courant primaire et ainsi le stockage de l'énergie magnétique dans le transformateur. L'élément de redressement est dans l'état bloqué et empêche alors le courant de circuler à travers l'enroulement secondaire et l'élément capacitif se décharge à travers la charge.

Au cours de la phase de sortie, l'ouverture de l'interrupteur principal empêche le courant primaire de circuler dans le circuit primaire. La conservation de l'énergie magnétique stockée dans le transformateur provoque alors l'apparition d'un courant secondaire circulant dans le sens de conduction de l'élément de redressement du circuit secondaire ce qui permet la charge de l'élément capacitif. L'intensité du courant secondaire circulant dans le circuit secondaire diminue jusqu'à ce qu'il n'y ait plus d'énergie magnétique dans le transformateur.

Afin de commander l'ouverture et la fermeture de l'interrupteur principal de manière cyclique, le dispositif comprend des moyens de commande en tension de l'interrupteur statique principal.

De tels moyens de commande comprennent généralement un interrupteur statique de commande reliant une borne de commande de l'interrupteur principal à la masse et un circuit de réaction reliant la borne de commande de l'interrupteur statique principal au circuit secondaire, le circuit de réaction étant activé lors de l'ouverture de l'interrupteur principal. Le circuit de réaction permet notamment de garantir une ouverture complète de l'interrupteur principal.

Lorsque l'intensité du courant primaire atteint une valeur seuil prédéterminée, l'interrupteur statique de commande passe de l'état ouvert à l'état fermé entraînant la mise à la masse de la borne de commande de l'interrupteur principal. Ceci provoque alors l'ouverture de l'interrupteur principal et l'activation du circuit de réaction. L'interrupteur principal reste alors ouvert jusqu'à annulation de l'intensité du courant secondaire liée à l'épuisement de l'énergie magnétique stockée dans le transformateur ce qui provoque la fermeture immédiate de l'interrupteur principal.

L'inconvénient de ces moyens de commande est de ne pas permettre un contrôle précis de la fréquence de découpage de l'interrupteur principal de manière à optimiser l'efficacité du dispositif. En effet, les durées des états fermé et ouvert de l'interrupteur principal sont déterminées à la fois par les valeurs de la tension d'entrée et de la résistance de la charge en sortie. En particulier, lorsque la résistance de la charge en sortie est élevée, les durées des états ouvert et fermé de l'interrupteur sont relativement courtes et la fréquence de découpage est relativement élevée. Dans le cas d'une variation brutale à la hausse de la tension d'entrée, une grande quantité d'énergie est alors transmise au circuit secondaire à cette fréquence de découpage très élevée risquant d'endommager les charges.

Il est connu également de l'état de la technique des moyens de commande comportant un ASIC (acronyme anglais pour Application Specific Integrated Circuit). Toutefois, l'inconvénient d'un tel composant est qu'il ne permet pas un contrôle précis des paramètres de température et de résistance aux vibrations et d'humidité. En effet, les moyens de commande sont formés par un circuit intégré dans du silicium dont les propriétés physiques sont difficilement contrôlables. Par ailleurs, un tel composant s'avère être relativement coûteux.

L'invention a notamment pour but de proposer un dispositif de génération d'une tension régulée permettant d'obtenir une tension régulée de manière précise et fiable sans recourir à des composants complexes.

A cet effet, l'invention a notamment pour objet un dispositif de génération d'une tension de sortie régulée à partir d'une tension d'entrée provenant d'une source d'alimentation électrique, du type comprenant :
- un transformateur de stockage d'énergie comprenant des enroulements primaire et secondaire couplés magnétiquement entre eux,
- un circuit primaire reliant la source d'alimentation à une masse, comprenant l'enroulement primaire et un interrupteur statique principal montés en série,
- un circuit secondaire, destiné à être relié à une charge, comprenant l'enroulement secondaire,
- des moyens de commande en tension de l'interrupteur statique principal comprenant un premier interrupteur statique de commande reliant une borne de commande de l'interrupteur statique principal à la masse,
caractérisé en ce que les moyens de commande en tension de l'interrupteur statique principal comprennent un second interrupteur statique de commande reliant la borne de commande de l'interrupteur statique principal à la masse, la fermeture du premier interrupteur de commande déclenchant la fermeture du second interrupteur de commande, et l'ouverture du second interrupteur de commande étant retardée par rapport à celle du premier interrupteur de commande.

La séquence d'ouverture et de fermeture de ces deux interrupteurs de commande permet ainsi un contrôle de la fréquence de découpage du dispositif avec des moyens simples et dont les propriétés thermiques sont aisément contrôlables à la différence d'un composant du type ASIC dont les propriétés thermique et électrique sont relativement complexes. En particulier, du fait que le dispositif comprend un second interrupteur de commande dont la fermeture est déclenchée par l'ouverture du premier interrupteur et dont l'ouverture est retardée par rapport à celle du premier interrupteur, ceci permet d'introduire une durée constante de temporisation au cours de laquelle l'interrupteur principal est maintenu dans l'état ouvert.

Un dispositif de génération selon l'invention peut en outre comprendre l'une ou plusieurs des caractéristiques selon lesquelles :
- les moyens de commande comprennent un premier circuit de commande du premier interrupteur statique en fonction d'un premier paramètre dépendant de l'intensité du courant dans le circuit primaire,
- le premier circuit de commande comprend une première branche reliant une borne de commande du premier interrupteur à un premier élément résistif formant shunt, le shunt étant monté dans le circuit primaire en série avec l'enroulement primaire et l'interrupteur principal,
- le paramètre de commande du premier interrupteur dépend également d'une tension de correction générée lors d'un dépassement d'une tension seuil de référence par la tension de sortie et/ou lors d'une variation de la tension de sortie lorsque la tension de sortie reste inférieure à la tension seuil de référence,
- le premier circuit de commande comprend encore une deuxième branche reliant la borne de commande du premier interrupteur à un deuxième élément résistif formant shunt et fournissant à ses bornes la tension de correction,
- les moyens de commande comprennent un circuit de génération d'une tension de correction de la tension de sortie raccordant une borne de génération de la tension de sortie du circuit secondaire à la masse et comprenant le deuxième shunt et un organe de référence monté en série avec le deuxième shunt, cet organe de référence ne laissant passer un courant à travers le deuxième shunt uniquement lors d'un dépassement de la tension seuil de référence par la tension de sortie,
- l'organe de référence comprend une diode Zener ayant une tension inverse de valeur sensiblement égale à la valeur de la tension seuil de référence,
- le circuit de génération comprend en outre un organe de limitation des variations de la tension de sortie lorsque la tension de sortie reste inférieure à la tension seuil de référence, monté en parallèle avec l'organe de référence, cet organe de limitation ne laissant passer un courant à travers le deuxième shunt uniquement lors d'une variation de la tension de sortie,
- le premier interrupteur de commande et l'organe de référence étant du type à jonction semi-conductrice, les jonctions semi-conductrices ont des effets thermiques qui se compensent,
- les moyens de commande comprennent un second circuit de commande du second interrupteur statique en fonction d'un second paramètre dépendant d'une inversion de la tension aux bornes de l'enroulement secondaire,
- le second circuit de commande comprend une première branche raccordant une borne de commande du second interrupteur à un troisième élément résistif et une deuxième branche raccordant la borne de commande du second interrupteur à l'enroulement secondaire et comportant un élément capacitif destiné à être chargé à travers le troisième élément résistif et un élément de redressement monté en série avec l'élément capacitif de manière à ce que la charge de l'élément capacitif soit provoquée par une inversion de la tension aux bornes de l'enroulement secondaire,
- le dispositif comprend un circuit de réaction comprenant un élément capacitif et un élément résistif montés en série avec cet élément capacitif et dans lequel le circuit de réaction raccorde la borne de commande de l'interrupteur principal à l'enroulement secondaire,
- les moyens de commande en tension de l'interrupteur principal comprennent un circuit de commande de la fermeture de l'interrupteur principal destiné à être activé lors de l'ouverture du second interrupteur de commande,
- le circuit de commande de la fermeture relie la borne de commande de l'interrupteur principal à l'enroulement secondaire et comporte un élément capacitif et un élément de redressement monté en série avec l'élément capacitif, la charge de l'élément capacitif étant provoquée par une inversion de la tension aux bornes de l'enroulement secondaire et la décharge de l'élément capacitif par l'ouverture du second interrupteur de commande,
- le circuit de commande de la fermeture comprend en outre un élément résistif monté en parallèle avec l'élément capacitif du circuit de manière à ce que la vitesse de décharge de l'élément capacitif dépende de la valeur de l'élément résistif,
- l'interrupteur principal, les premier et deuxième interrupteurs de commande sont du type choisi parmi un transistor bipolaire et un transistor à effet de champ, la borne de commande du transistor bipolaire étant une base du transistor et la borne de commande du transistor à effet de champ étant une grille du transistor,
- le transformateur comprend au moins deux enroulements secondaires et autant de circuits secondaires destinés à être chacun relié à une charge.

L'invention sera mieux comprise à la lecture de la description qui va suivre, donnée uniquement à titre d'exemple et faite en se référant aux dessins dans lesquels :
- la figure 1 est une vue schématique d'un dispositif selon l'invention pour la génération d'une tension régulée à partir d'une tension d'entrée ;
- la figure 2 est une vue schématique d'un circuit électrique formant le dispositif représenté sur la figure 1 ;

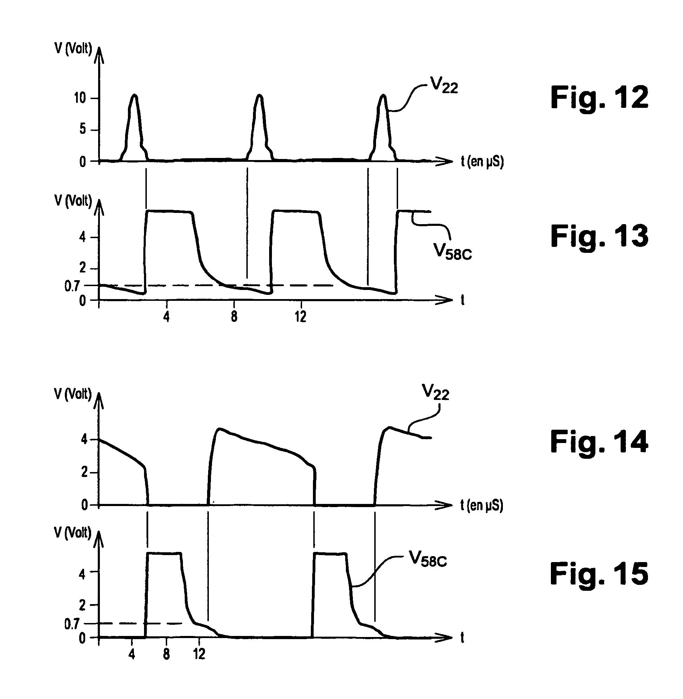

- les figures 3 à 8 et 11 à 15 sont des graphiques représentant chacun une courbe de l'évolution d'un signal de tension en fonction du temps, en différents points du circuit électrique du dispositif de la figure 2,
- les figures 9 et 10 sont des graphiques représentant schématiquement la séquence d'ouverture et de fermeture de deux interrupteurs du dispositif en fonction du temps.

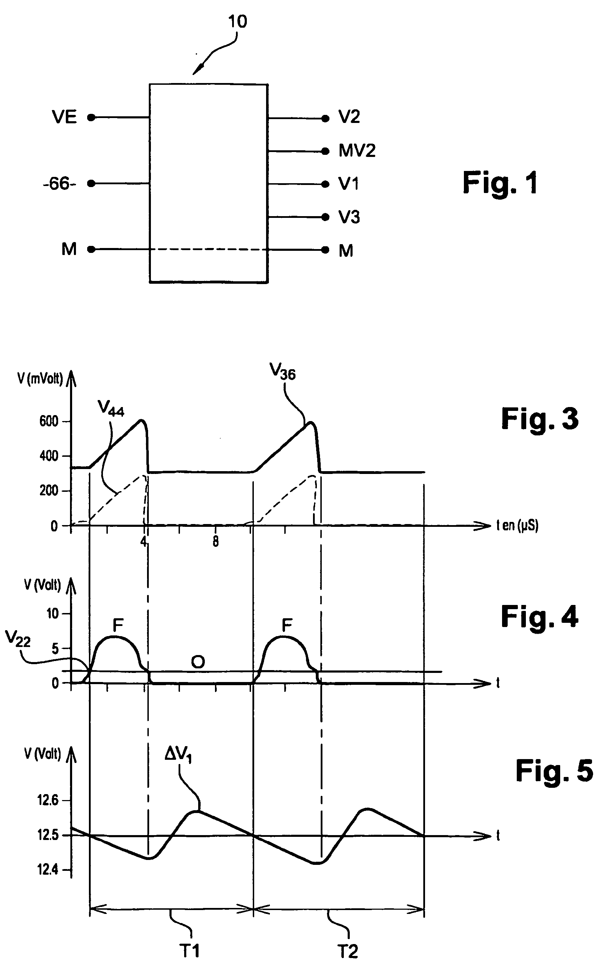

On a représenté sur la figure 1 un dispositif de génération d'au moins une tension de sortie régulée à partir d'une tension d'entrée VE selon l'invention. Le dispositif est désigné par la référence générale 10.

Dans cet exemple, la tension VE est générée à partir d'une source d'alimentation électrique étant une batterie de véhicule automobile et la tension de sortie régulée est destinée à alimenter électriquement un ou plusieurs organes électriques (non représentés) d'un véhicule automobile. En particulier, comme cela est illustré sur la figure 1, le dispositif 10 est destiné à générer plus de trois tensions de sortie régulées V1, V2 et V3. En particulier, dans cet exemple, la tension V2 est une tension flottante, c'est-à-dire isolée galvaniquement, c'est-à-dire isolée électriquement d'une masse M de référence. Par exemple, la tension d'entrée VE a une valeur d'environ 12 Volts, les tensions V1, V3 ont des valeurs respectives de 12Volts et 5Volts et la tension flottante V2 a une valeur de 12Volts. La tension de sortie V2 est référencée par rapport à un potentiel MV2 du circuit du dispositif 10.

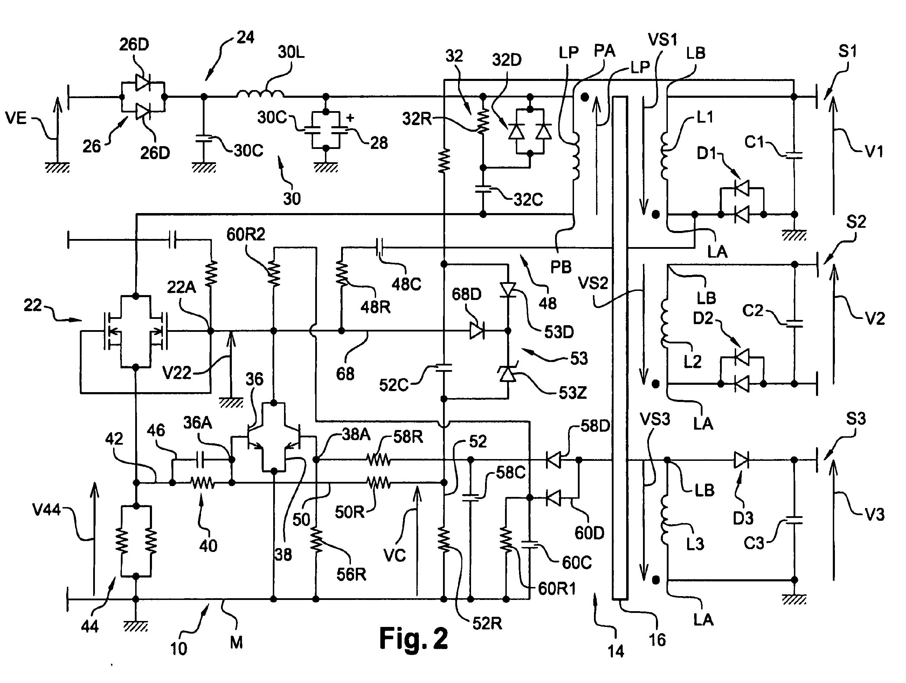

Le dispositif 10 comprend un circuit 12 représenté en détail sur la figure 2. Le circuit 12 comprend un transformateur 14 de stockage d'énergie comprenant un entrefer 16 et des enroulements primaire Lp et secondaire couplés magnétiquement entre eux. Dans le dispositif 10 de l'exemple décrit, le transformateur 14 comprend trois enroulements secondaires L1, L2 et L3 pour la génération des trois tensions de sorties régulées respectives V1, V2 et V3. Bien entendu, le transformateur 14 peut comprendre plus de trois enroulements secondaires.

Chaque enroulement primaire ou secondaire est muni de deux bornes d'extrémité et est défini par un nombre de spires et un sens d'enroulement des spires, l'entrée de l'enroulement étant repéré par un point situé à une extrémité de l'enroulement. Par la suite, on notera tension aux bornes d'un enroulement, la différence de potentiel dans le sens d'enroulement des spires, c'est-à-dire entre l'entrée et la sortie de cet enroulement.

En particulier, l'enroulement primaire Lp est défini par un nombre de spires Np et un sens d'enroulement des spires allant de son extrémité PA vers son extrémité PB et les trois enroulements secondaires sont définis chacun par un nombre de spires N1, N2 et N3, le sens d'enroulement des spires de chaque enroulement secondaire étant opposé à celui de l'enroulement primaire, et des bornes d'extrémités LA, LB.

En particulier, lorsque la tension Vp est positive, les tensions VS1, VS2 et VS3 sont également positives.

Le dispositif 10 comprend encore un circuit primaire 20 reliant la source d'alimentation à une masse M, comprenant l'enroulement primaire Lp et un interrupteur statique principal 22 montés en série.

L'interrupteur statique principal 22 est muni d'une borne de commande 22A. De préférence, l'interrupteur principal 22 est un transistor à effet de champ du type MOSFET comprenant une grille formant la borne de commande 22A. Dans l'exemple illustré, l'interrupteur principal 22 comprend un ensemble de deux transistors à effet de champ montés en parallèle. Par exemple, l'interrupteur 22 est dans l'état fermé lorsque la tension V22 à sa borne de commande est supérieure à 2Volts et est dans l'état ouvert dans le cas contraire.

Le circuit primaire 20 comprend également des moyens 24 de filtrage de la tension d'entrée montés en série avec l'enroulement primaire entre la source d'alimentation et l'enroulement primaire. Ces moyens de filtrage 24 permettent de protéger le dispositif 10 à la fois de surtensions de la tension d'entrée, d'une inversion de polarités des bornes de la batterie et des interférences électromagnétiques.

A cet effet, les moyens de filtrage 24 comprennent un élément de redressement 26 tel qu'une diode ou, comme dans l'exemple illustré sur la figure 2, un ensemble de deux diodes 26D montées en parallèle. Cet élément de redressement 26 empêche par exemple le courant de circuler en cas d'inversion intempestive des bornes de la batterie.

Par ailleurs, les moyens de filtrage 24 comprennent également un élément capacitif 28 de stockage d'énergie destiné à être chargé et formant une source d'alimentation additionnelle en cas par exemple de chute brutale de la tension VE générée par la batterie ainsi qu'un circuit de filtrage 30 de type LC comprenant une inductance 30L ainsi que deux éléments capacitifs 30C ayant pour fonction de filtrer les signaux de tension à haute fréquence générés par le dispositif 10.

Le circuit primaire 20 comprend également des moyens 32 montés en parallèle avec l'enroulement primaire P destinés à limiter l'élévation de température de l'interrupteur principal 22 en fonctionnement formant de façon classique un « circuit d'aide à la commutation » ou « circuit de protection ». Ces moyens 32 comprennent de façon classique une résistance 32R montée en parallèle avec un élément de redressement 32D formé par un ensemble de deux diodes et un élément capacitif 32C monté en série avec l'ensemble formé par la résistance 32R et les diodes 32D. Ce circuit 32 permet de limiter l'échauffement des transistors formant l'interrupteur principal 22 en dérivant le courant circulant dans le circuit primaire 20 dans la résistance 32R notamment lorsque l'interrupteur principal 22 passe de l'état fermé à l'état ouvert.

Le dispositif 10 comprend également au moins un circuit secondaire et dans cet exemple comprend trois circuits secondaires S1, S2, S3, chaque circuit secondaire étant destiné à être relié à une ou plusieurs charges (non représentées), par exemple un organe électrique du véhicule automobile.

Chaque circuit secondaire S1, S2, S3 comprend un enroulement secondaire correspondant L1, L2, L3. Chaque circuit secondaire S1, S2, S3 comprend également un élément de redressement D1, D2, D3 monté en série avec l'enroulement secondaire L1, L2, L3 et un élément capacitif C1, C2, C3 monté en parallèle avec l'enroulement secondaire L1, L2, L3 et l'élément de redressement D1, D2, D3 et destiné à fournir à ses bornes la tension de sortie V1, V2, V3.

En particulier, chaque élément de redressement D1, D2, D3 comprend par exemple une diode (circuit secondaire S3) ou, éventuellement, un ensemble de deux diodes montées en parallèle (circuits secondaires S2, S1).

Lorsque l'interrupteur principal 22 passe de l'état fermé à l'état ouvert, l'intensité du courant circulant dans le circuit primaire 20 s'annule et l'énergie magnétique stockée dans l'entrefer 16 est restituée à chaque circuit secondaire S1, S2, S3 par l'intermédiaire de chaque enroulement secondaire. En particulier, la tension induite VS1, VS2, VS3 aux bornes de chaque enroulement secondaire L1, L2, L3 devient négative et les diodes des éléments D1, D2, D3 passent de l'état bloqué à l'état passant autorisant la charge de l'élément capacitif correspondant C1, C2, C3 puis sa décharge à travers le ou les organes électriques correspondants.

Dans le cas contraire, c'est-à-dire lorsque l'interrupteur principal 22 passe de l'état ouvert à l'état fermé, l'intensité du courant primaire augmente de façon linéaire dans le circuit primaire 20 et la tension Vp aux bornes de l'enroulement primaire Lp devient positive. La tension aux bornes de chaque enroulement secondaire est également positive et les diodes D1, D2, D3 sont par conséquent dans leur état bloqué. Chaque élément capacitif C1, C2, C3 poursuit sa décharge à travers l'organe électrique correspondant.

Afin de commander l'ouverture et la fermeture de l'interrupteur principal 22, le dispositif 10 comprend encore des moyens 34 de commande de l'interrupteur principal 22.

Ces moyens de commande 34 comprennent un premier interrupteur statique 36 de commande reliant une borne de commande 22A de l'interrupteur statique principal 22 à la masse M et un second interrupteur statique 38 de commande reliant la borne de commande 22A de l'interrupteur statique principal 22 à la masse M.

Chaque interrupteur de commande 36, 38 est muni d'une borne de commande en tension respectivement 36A, 38A, les interrupteurs de commande 36, 38 étant dans l'exemple illustré sur la figure 1 des transistors bipolaires, la base de ces transistors formant la borne de commande de ces transistors. Par ailleurs, de préférence, les transistors 36, 38 sont reliés entre eux par leurs collecteurs et émetteurs respectifs. Plus précisément, les transistors 36, 38 sont dans l'état fermé lorsque la tension de commande respective V36, V38 à leur borne de commande respective 36A, 38A est supérieure à sensiblement 0.6 Volt et dans l'état ouvert dans le cas contraire.

Conformément à l'invention, la fermeture du premier interrupteur de commande 36 déclenche la fermeture du second interrupteur de commande 38, et l'ouverture du second interrupteur de commande 38 est retardée par rapport à celle du premier interrupteur de commande 36.

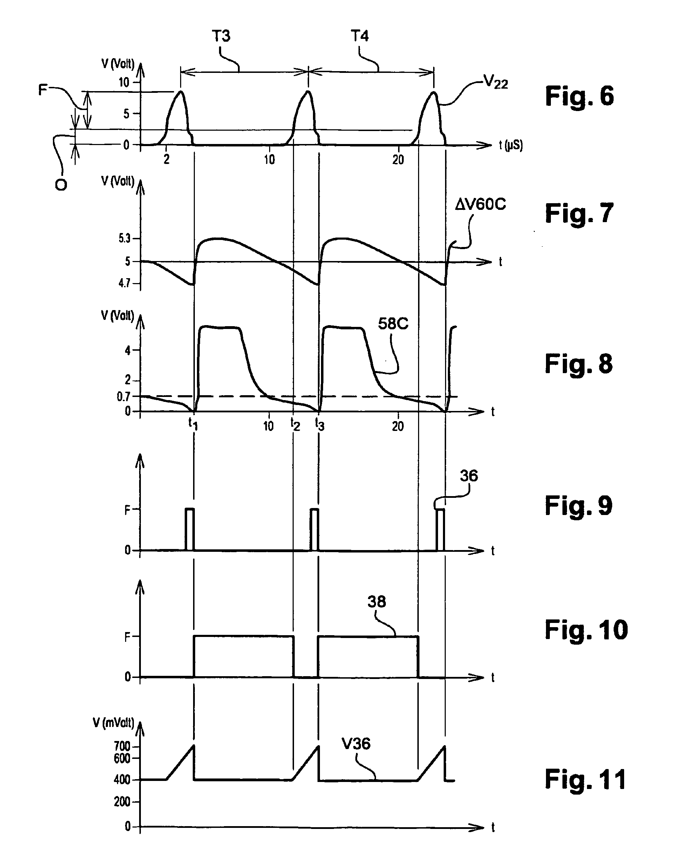

En d'autres termes, le premier interrupteur 36 a une fonction d'amorçage de l'ouverture de l'interrupteur principal 22 et le second interrupteur 38 a une fonction de relais permettant de maintenir ouvert l'interrupteur principal 22 en maintenant le raccordement de la borne de commande 22A de l'interrupteur principal 22 à la masse M pendant une durée prédéterminée. Par exemple, l'interrupteur principal 22 est dans l'état fermé lorsque la tension à sa borne de commande 22A est supérieure à 2 Volts et dans l'état ouvert dans le cas contraire. On a représenté la séquence d'ouverture et de fermeture de ces deux interrupteurs 36 et 38 en fonction du temps sur les graphiques des figures 9 et 10 pendant deux cycles complets T3, T4. On voit ainsi que dès que le premier interrupteur 36 passe de l'état fermé à l'état ouvert, le second interrupteur 38 passe de l'état ouvert à l'état fermé et que l'ouverture du second interrupteur 38 est retardée par rapport à celle du premier interrupteur 36. L'état ouvert « O » de l'interrupteur principal 22 coïncide ainsi dans un premier temps avec l'état fermé « F » du premier interrupteur de commande 36 et dans un second temps avec l'état fermé « F » du second interrupteur de commande 38 (voir graphiques des figures 6, 9 et 10).

Plus particulièrement, les moyens de commande 34 comprennent un premier circuit 40 de commande du premier interrupteur de commande 36 en fonction d'un paramètre dépendant de l'intensité du courant dans le circuit primaire 20.

Ainsi, le premier circuit de commande 40 comprend une première branche 42 reliant la borne de commande 36A du premier interrupteur 36 à un premier élément résistif formant shunt 44, le shunt 44 étant monté dans le circuit primaire 20 en série avec l'enroulement primaire Lp et l'interrupteur principal 22. Le shunt 44 comprend dans cet exemple un ensemble de deux résistances montées en parallèle.

De façon classique, le shunt 44 fournit à ses bornes une tension V44 proportionnelle à l'intensité du courant primaire. Afin de filtrer les basses fréquences du signal de tension aux bornes du shunt 44, la première branche 42 comprend en outre un élément 46 de filtrage classique des basses fréquences comprenant un élément capacitif 46C monté en parallèle avec un élément résistif 46R.

De préférence, le dispositif 10 comprend également un circuit 48 de réaction comprenant un élément capacitif 48C tel qu'un condensateur et un élément résistif 48R tel qu'une résistance monté en série avec le condensateur 48C et raccordant la borne de commande 22A de l'interrupteur principal 22 avec la borne d'entrée LA d'un des enroulements secondaires L1, L2, L3, par exemple, la borne d'entrée LA de l'enroulement L1 (figure 2). En particulier, l'activation du circuit de réaction 48 coïncide avec l'ouverture de l'interrupteur principal 22.

En effet, lorsque l'interrupteur principal 22 est dans l'état fermé, la tension entre la borne d'entrée LA et la borne de commande 22A est positive et le condensateur 48C est dans l'état chargé. Le passage du premier interrupteur de commande 36 de l'état ouvert à l'état fermé provoque le raccordement de la grille 22A de l'interrupteur principal 22 à la masse M et l'amorçage de l'ouverture de cet interrupteur principal 22. L'amorçage de l'ouverture de cet interrupteur principal 22 entraîne une inversion de tension aux bornes des enroulements secondaires et la tension entre la borne d'entrée LA et la borne de commande 22A devient négative ce qui entraîne la décharge du condensateur 48C à travers la résistance 48R. Cette décharge a pour effet d'accélérer la chute de tension à la borne de commande de l'interrupteur principal 22A et ainsi de garantir l'ouverture complète et relativement rapide de l'interrupteur principal 22.

Par ailleurs, afin de corriger des éventuelles variations intempestives de la tension de sortie V1, V2 ou V3 générée par chaque circuit secondaire, risquant d'endommager la ou les charges, le paramètre de commande du premier interrupteur 36 dépend également d'une tension de correction VC générée lors d'un dépassement d'une tension seuil de référence, définie en relation avec une des sorties d'alimentation de la charge, par la tension de sortie correspondante. Par exemple, on définit une tension V1 Réf pour la tension de sortie V1, cette tension V1Réf étant égale à 12 Volt. La tension de correction VC est de préférence également générée lors d'une variation de la tension de sortie V1 lorsque la tension de sortie V1 est supérieure à la tension seuil de référence V1 Réf.

A cet effet, le premier circuit de commande 40 comprend encore une deuxième branche 50 munie d'une résistance 50R reliant la borne de commande 36A du premier interrupteur 36 à un deuxième élément résistif 52R telle qu'une résistance formant shunt et fournissant à ses bornes la tension de correction VC.

Dans l'exemple décrit, le paramètre de commande dépend ainsi de la somme de deux tensions : la tension de correction VC aux bornes du deuxième shunt 52R et la tension V44 aux bornes du premier shunt 44.

Les moyens de commande 34 comprennent également un circuit 52 de génération de la tension de correction VC raccordant par exemple une borne de sortie d'un des circuits secondaires S1, S2, S3 à la masse M (par exemple la borne de sortie correspondant à une borne du condensateur C1) et comprenant le deuxième shunt 52R et un organe 53 de référence monté en série avec le shunt 52R, cet organe de référence 53 laissant passer un courant à travers le shunt 52R uniquement lorsque la tension aux bornes de cet organe 53 dépasse la tension seuil de référence V1 Réf.

De préférence, l'organe de référence 53 comprend une diode Zener 53Z ayant une tension inverse de valeur sensiblement égale à la valeur de la tension de référence V1Réf, c'est-à-dire dans cet exemple égale à 12 Volts.

En outre, avantageusement, le premier interrupteur de commande 36 et l'organe de référence 53 étant du type à jonction semi-conductrice, les jonctions semi-conductrices ont des effets thermiques qui se compensent. A cet effet, l'organe de référence 53 comprend également éventuellement une diode classique 53D montée en série avec la diode Zener 53Z, cette diode étant également du type à jonction semi-conductrice.

Afin également d'éviter des variations de tension brutale des tensions de sortie V1, V2, V3, lorsque la tension de sortie V1 est inférieure à la tension seuil de référence V1Réf, le circuit de génération 52 comprend en outre un organe 52C de limitation des variations des tensions de sortie V1, V2, V3 monté en parallèle avec l'organe de référence 53, cet organe de limitation 52C ne laissant passer un courant à travers le deuxième shunt 52R que lors d'une variation de la tension de sortie V1. L'organe de limitation 52C comprend dans cet exemple un condensateur classique.

Ainsi, lorsque la tension de sortie V1 est inférieure à la tension de référence V1Réf, correspondant dans cet exemple à la tension inverse de la diode Zener 53Z et que la tension de sortie V1 est sensiblement constante, aucun courant ne circule dans la résistance 52R et la tension de correction VC est par conséquent nulle.

En revanche, lorsque la tension de sortie V1 varie tout en restant inférieure à la tension de référence V1 Réf, le condensateur formant l'organe de limitation 52C laisse passer un courant dans la résistance 52R de sorte qu'une tension de correction VC non nulle proportionnelle à l'intensité du courant la traversant est générée à ses bornes. Cette tension de correction VC est alors additionnée à la tension V44 générée aux bornes du shunt 44. Ceci va avoir pour effet de réduire la durée de l'état fermé de l'interrupteur principal 22 et ainsi de diminuer le rapport cyclique de l'interrupteur 22. Le rapport cyclique de l'interrupteur 22 est défini, de façon connue en soi, comme étant le rapport entre la durée de l'état fermé de l'interrupteur 22 sur la durée d'une période complète de l'interrupteur 22 (ou d'un cycle).

On a représenté sur les graphes des figures 3, 4 et 5, deux cycles complets du dispositif 10 noté T1, T2, une fois la phase transitoire de démarrage du dispositif terminée. Ainsi, dans le premier cycle T1, initialement l'interrupteur principal est fermé et la tension V44 aux bornes du shunt 44 augmente linéairement (voir graphe de la figure 3). La tension de commande V36 à la borne de commande 36A augmente également linéairement et correspond sensiblement à la somme de la tension V44 et de la tension de correction VC. Ainsi, lorsque la tension V36 atteint la valeur seuil de tension de 0.7 Volt à la borne de commande 36A, ceci provoque la fermeture du premier interrupteur 36 et donc le raccordement de la grille 22A de l'interrupteur principal 22 à la masse M. Le circuit de réaction 48 est alors activé car la tension aux bornes de l'enroulement secondaire L1 s'inverse entraînant la décharge du condensateur 48C et l'ouverture complète de l'interrupteur principal 22. Lorsque l'interrupteur principal est dans l'état ouvert (c'est-à-dire la tension à sa borne de commande est inférieure à 2Volt), le condensateur C1 se charge dans un premier temps puis se décharge dans un second temps lors de l'annulation de l'intensité du courant secondaire (toute l'énergie transférée au cours de la phase d'entrée dans le circuit secondaire est alors épuisée) comme illustré sur le graphique de la figure 5 représentant la variation ΔV1 aux bornes du condensateur C1.

Par ailleurs, les moyens de commande 34 comprennent un second circuit 54 de commande du second interrupteur statique 38 en fonction d'un second paramètre dépendant d'une inversion de la tension V3 aux bornes de l'enroulement secondaire L3.

De préférence, le second circuit de commande 54 comprend une première branche 56 reliant la borne de commande 38A du second interrupteur 38 à la masse M et comprenant un troisième élément résistif 56R.

Le second circuit 54 comprend encore une deuxième branche 58 raccordant la borne de commande 38A à l'enroulement secondaire L3 comprenant un élément capacitif 58C destiné à être chargé et déchargé à travers le troisième élément résistif 56R et un élément de redressement 58D monté en série avec l'élément capacitif 58C. Ainsi, la charge du condensateur 58C est provoquée par une inversion de tension aux bornes de l'enroulement secondaire L3.

La fermeture du premier interrupteur 36 déclenche ainsi la fermeture du second interrupteur 38. En effet, lorsque la tension à la borne de commande du premier interrupteur 36 atteint la tension seuil de fermeture du premier interrupteur 36, l'interrupteur principal 22 passe de l'état fermé à l'état ouvert provoquant une inversion de la tension aux bornes de chaque enroulement secondaire L1, L2 ou L3. En particulier, la tension V1, V2, V3 aux bornes de chaque enroulement secondaire L1, L2 ou L3 lors du passage de l'état fermé à l'état ouvert de l'interrupteur principal 22 devient négative. Lorsque la tension V3 de l'enroulement secondaire L3 est négative, c'est-à-dire positive dans le sens allant de l'extrémité LB à LA de l'enroulement L3, la diode 58D est dans l'état passant et autorise la charge du condensateur 58C et la tension aux bornes du troisième élément résistif 56R augmente jusqu'à atteindre la tension seuil de commande de fermeture du second interrupteur de commande 38.

En outre, les moyens de commande 34 en tension de l'interrupteur principal 22 comprennent un troisième circuit 60 de commande de la fermeture de l'interrupteur principal 22 activé lors de l'ouverture du second interrupteur de commande 38.

De préférence, le troisième circuit de commande 60 relie la borne de commande 22A de l'interrupteur principal 22 à un des enroulements secondaires L1, L2 ou L3 (dans cet exemple il s'agit de l'enroulement L3) et comporte un ensemble comprenant un élément capacitif 60C et un premier élément résistif 60R1 montés en parallèle et un deuxième élément résistif 60R2 monté en série avec l'ensemble, l'élément capacitif 60C étant destiné à être chargé lors d'une inversion de la tension aux bornes de l'enroulement secondaire L3 et déchargé dans le second élément résistif 60R2 lors de l'ouverture du second interrupteur de commande 38. En particulier, la vitesse de décharge du condensateur 60C dépend de la valeur de la résistance 60R1.

Ainsi, la fermeture de l'interrupteur principal 22 est provoquée par l'ouverture du second interrupteur de commande 38.

En effet, on voit sur le graphique de la figure 8 que le condensateur 58C se décharge pendant une durée prédéterminée au cours de laquelle l'interrupteur principal 22 est maintenu dans l'état ouvert. Le condensateur 60C se charge, étant comme le condensateur 58C, alimenté en courant par le circuit secondaire S3, puis se décharge, dès que l'intensité du courant circulant dans le circuit secondaire S3 s'annule (correspondant à l'épuisement de l'énergie emmagasinée dans le transformateur 14 au cours de la phase d'entrée) à travers la résistance 60R2, cette dernière étant raccordée à la masse M tout le temps que le second interrupteur 38 est dans l'état fermé.

Dès que la tension aux bornes du troisième élément résistif 56R est inférieure à la tension seuil du transistor 38, le transistor 38 passe de l'état passant à l'état bloqué. La borne de commande 22A de l'interrupteur principal 22 n'est alors plus raccordée à la masse M mais à la résistance 60R2 à travers laquelle le condensateur 60C poursuit sa décharge (voir figure 7). La tension de commande V22 devient alors supérieure à la tension seuil déclenchant la fermeture de l'interrupteur principal 22 et le démarrage d'un nouveau cycle.

Ainsi, on a illustré sur les graphiques des figures 7 et 8, l'évolution des tensions aux bornes des condensateurs 58C et 60C pendant deux cycles complets T3, T4 de fonctionnement du dispositif 10. Au début du cycle T3 au temps t1, l'interrupteur principal passe de l'état fermé « F » à l'état ouvert « O » (figure 6). L'ouverture de l'interrupteur principal 22 provoque alors une inversion de tension au bornes de l'enroulement secondaire L3 auquel est raccordé le condensateur 58C. L'inversion de la tension aux bornes de l'enroulement secondaire L3 provoque le passage de l'état bloqué à l'état passant des diodes 58D et 60D et ainsi la charge des condensateurs 58C et 60C (voir graphique des figures 7 et 8). La tension aux bornes des résistances 58R et 56R augmente jusqu'à ce que la tension aux bornes de la résistance 56R atteigne le seuil de 0.7Volt provoquant la fermeture « F » du second interrupteur de commande 38 ce qui permet le maintien du raccordement de l'interrupteur principal 22 à la masse M. Ce raccordement est maintenu jusqu'à ce que la tension 56R aux bornes de la résistance 56R passe en-dessous du seuil de sensiblement 0.6 Volt au temps t2 lors de la décharge du condensateur 58C provoquant alors l'ouverture « O » du second interrupteur 38 (figure 10). La borne de commande 22A n'est alors plus raccordée à la masse M et est alimentée par la décharge du condensateur 60C à travers la résistance 60R2 ce qui provoque la fermeture de l'interrupteur 22 au temps t2. L'intensité du courant primaire augmente alors de façon linéaire jusqu'à ce que la tension V36 atteigne la valeur seuil de fermeture du premier interrupteur 36 au temps t3. Le cycle T4 commence à cet instant t3.

De façon classique, le dispositif 10 comprend des moyens 62 de démarrage du dispositif 10 comprenant un circuit 64 de démarrage raccordant la borne de commande 22A de l'interrupteur principal à un contacteur 66. Ce circuit de démarrage 64 comprend un condensateur 64C et une résistance 64R montée en série avec le condensateur 64C. Le contacteur 66 permet le raccordement ou non du circuit de démarrage 64 à une source d'alimentation, par exemple la batterie du véhicule automobile respectivement en fonction de sa position « en contact » ou « hors contact ».

Par ailleurs, le dispositif 10 comprend encore un circuit 68 raccordant la borne 22A au circuit de génération de la tension de correction de manière à limiter l'élévation de la tension entre la borne 22A et la masse M. Ce circuit 68 comprend de façon classique une diode de redressement 68D.

On va maintenant décrire les principaux aspects du fonctionnement du dispositif 10 liés à l'invention. On considère initialement que le dispositif 10 fonctionne de manière cyclique et que la phase transitoire de démarrage au cours de laquelle les condensateurs initialement déchargés sont en cours de charge est terminée. On considère par ailleurs que la tension d'entrée VE est inférieure à la tension de référence Vréf1 de 12 Volt, par exemple VE a une valeur de 7 Volts.

Dans ce cas, le rapport cyclique de l'interrupteur principal 22 est alors relativement élevé de manière à permettre un transfert d'énergie suffisant malgré une tension d'entrée VE relativement basse. En effet, ceci est lié au fait que, comme la tension VE est relativement basse, l'intensité du courant primaire augmente linéairement mais avec une vitesse relativement faible. De ce fait, la durée dans l'état fermé « F » de l'interrupteur principal 22 est relativement grande de l'ordre de 12 µs. En revanche, la durée de décharge du condensateur 58C ne varie pas avec la valeur de la tension d'entrée VE de sorte que la durée d'ouverture de l'interrupteur 22 ne varie pas sensiblement avec la valeur de la tension d'entrée VE. En effet, la durée d'ouverture de l'interrupteur principal est définie par une durée variable dépendant du temps de démagnétisation du circuit secondaire mais également d'une durée constante de temporisation déterminée par la durée de décharge du condensateur 58C. Par conséquent, le rapport cyclique de l'interrupteur principal 22 est relativement élevé lorsque la tension VE est égale à 7 Volt en comparaison avec le rapport cyclique de l'interrupteur 22 lorsque la tension VE est égale à 12 Volt.

Dans le cas d'une variation brutale de la tension d'entrée VE, le circuit de génération 52 permet avantageusement de limiter toute augmentation intempestive des tensions de sortie V1, V2, V3 risquant d'endommager les charges reliées à ces circuits.

En effet, dans le cas d'une variation de la tension de sortie V1 inférieure à la tension de référence V1Réf correspondant à une variation de la tension d'entrée VE, le condensateur 52C, sensible aux variations de la tension de sortie V1 laisse passer un courant à travers le shunt de correction 52R. La tension de correction VC est alors non nulle et additionnée à la tension V44 du shunt 44 permettant une fermeture anticipée du premier interrupteur 36 puis du second 38 et ainsi l'ouverture anticipée de l'interrupteur principal 22 de manière à raccourcir la durée de fermeture de l'interrupteur principal 22 et donc de diminuer le rapport cyclique. Sans la prise en compte de cette variation brutale de la tension d'entrée VE, le rapport cyclique de l'interrupteur 22 aurait été maintenu à une valeur élevée risquant alors d'endommager les charges reliés aux circuits secondaires.

Ainsi, en cas de variation brutale de la tension d'entrée VE d'une valeur de 5 Volt à une valeur de 30 Volt par exemple, une tension de correction VC est générée aux bornes du shunt 52R car le condensateur 52C transmet la variation de la tension de sortie V1 correspondante au shunt de correction 52R en laissant circuler un courant à travers le circuit de génération 52.

Dans le cas où la variation de la tension d'entrée VE entraîne un dépassement de la tension seuil de référence V1Réf par la tension de sortie V1, la diode Zener 53Z permet le passage d'un courant dans le shunt de correction 52R et une tension VC est générée aux bornes du shunt 52R qui est additionnée avec la tension V44 aux bornes du shunt 44.

Par exemple, on a représenté l'évolution de la tension 22A aux bornes de l'interrupteur principal 22 (figure 11) et de la tension V58C aux bornes du condensateur 58C pour une tension d'entrée VE égale à 35 Volts. On voit que, dans ce cas, le rapport cyclique de l'interrupteur principal est relativement faible.

Par conséquent, le dispositif 10 permet d'adapter le rapport cyclique de l'interrupteur 22 en fonction de la tension d'entrée VE de manière à éviter l'endommagement des organes électriques alimentés par le dispositif 10 en cas de variations brutales et intempestives de la tension d'entrée VE.

En outre, le dispositif 10 permet d'éviter un blocage de l'interrupteur principal 22 dans un mode linéaire, c'est-à-dire un mode dans lequel le dispositif 10 ne fonctionne plus de manière cyclique, l'interrupteur principal 22 étant maintenu dans l'état fermé. Ceci peut se produire notamment dans le cas d'un dysfonctionnement du circuit de réaction à cause par exemple d'une perturbation électromagnétique formant une impulsion de haute énergie aux bornes du circuit de réaction empêchant la réaction de se produire. Dans ce cas, la diode 60D est dans l'état bloqué de sorte que le condensateur 60C se décharge à travers la résistance 60R2 à une vitesse de décharge imposée par la valeur de la résistance 60R1 (voir figure 7). Cette décharge a pour effet de provoquer une chute du potentiel à la borne de commande 22A et ainsi l'ouverture de l'interrupteur 22. Ainsi, il est possible de choisir la valeur de la résistance 60R1 de manière à limiter la durée de fermeture de l'interrupteur 22 en fonctionnement linéaire et ainsi provoquer un arrêt relativement rapide du dispositif 10.

Ainsi, le dispositif 10 protège les composants électriques d'un échauffement excessif en limitant la durée d'un fonctionnement en mode linéaire du dispositif.

## Revendications

1. Dispositif (10) de génération d'une tension de sortie régulée (V1, V2, V3) à partir d'une tension d'entrée (VE) provenant d'une source d'alimentation électrique, du type comprenant :
- un transformateur (14) de stockage d'énergie comprenant des enroulements primaire (P) et secondaire (L1, L2, L3) couplés magnétiquement entre eux,
- un circuit primaire (20) reliant la source d'alimentation à une masse (M), comprenant l'enroulement primaire (P) et un interrupteur statique principal (22) montés en série,
- un circuit secondaire (S1, S2, S3), destiné à être relié à une charge, comprenant l'enroulement secondaire (L1, L2, L3),
- des moyens (34) de commande en tension de l'interrupteur statique principal (22) comprenant un premier interrupteur statique (36) de commande reliant une borne de commande (22A) de l'interrupteur statique principal (22) à la masse (M),
**caractérisé en ce que** les moyens de commande en tension (34) de l'interrupteur statique principal (22) comprennent un second interrupteur statique (38) de commande reliant la borne de commande (22A) de l'interrupteur statique principal (22) à la masse (M), la fermeture du premier interrupteur de commande (36) déclenchant la fermeture du second interrupteur de commande (38), et l'ouverture du second interrupteur de commande (38) étant retardée par rapport à celle du premier interrupteur de commande (36), **en ce que**
les moyens de commande (34) comprennent un premier circuit (40) de commande du premier interrupteur statique (36) en fonction d'un premier paramètre dépendant de l'intensité du courant dans le circuit primaire (20) et **en ce que**
le premier circuit de commande (40) comprend une première branche (42) reliant une borne de commande (36A) du premier interrupteur à un premier élément résistif (44) formant shunt, le shunt (44) étant monté dans le circuit primaire (20) en série avec l'enroulement primaire (P) et l'interrupteur principal (22).

2. Dispositif (10) selon la revendication 1, dans lequel le paramètre de commande du premier interrupteur (36) dépend également d'une tension de correction (VC) générée lors d'un dépassement d'une tension seuil de référence (V1Réf) par la tension de sortie (V1) et/ou lors d'une variation de la tension de sortie (V1) lorsque la tension de sortie (V1) reste inférieure à la tension seuil de référence (V1Réf)

3. Dispositif (10) selon la revendication 2, dans lequel le premier circuit de commande (40) comprend encore une deuxième branche (50) reliant la borne de commande (36A) du premier interrupteur (36) à un deuxième élément résistif (52R) formant shunt et fournissant à ses bornes la tension de correction (VC).

4. Dispositif (10) selon la revendication 3, dans lequel les moyens de commande (34) comprennent un circuit (52) de génération d'une tension de correction (VC) de la tension de sortie (V1, V2, V3) raccordant une borne de génération de la tension de sortie (V1) du circuit secondaire (S1) a la masse (M) et comprenant le deuxième shunt (52R) et un organe de référence (53) monté en série avec le deuxième shunt (52R), cet organe de référence (53) ne laissant passer un courant à travers le deuxième shunt (52R) uniquement lors d'un dépassement de la tension seuil de référence (V1 Réf) par la tension de sortie (V1).

5. Dispositif (10) selon la revendication 4, dans lequel l'organe de référence (53) comprend une diode Zener (53Z) ayant une tension inverse de valeur sensiblement égale à la valeur de la tension seuil de référence (V1Réf).

6. Dispositif (10) selon l'une quelconque des revendications 1 à 5, dans lequel le circuit de génération (52) comprend en outre un organe (52C) de limitation des variations de la tension de sortie (V1, V2, V3) lorsque la tension de sortie (V1) reste inférieure à la tension seuil de référence (V1Réf), monté en parallèle avec l'organe de référence (53), cet organe de limitation (52C) ne laissant passer un courant à travers le deuxième shunt (52R) uniquement lors d'une variation de ta tension de sortie (V1).

7. Dispositif (10) selon une quelconque des revendications 3 à 6, dans lequel, le premier (36) interrupteur de commande et l'organe de référence (53) étant du type à jonction semi-conductrice, les jonctions semi-conductrices ont des effets thermiques qui se compensent.

8. Dispositif (10) selon l'une quelconque des revendications 1 à 7, dans lequel les moyens de commande (34) comprennent un second circuit (54) de commande du second interrupteur statique (38) en fonction d'un second paramètre dépendant d'une inversion de la tension aux bornes de l'enroulement secondaire (L3).

9. Dispositif (10) selon la revendication 8, dans lequel le second circuit de commande (54) comprend une première branche (56) raccordant une borne de commande (38A) du second interrupteur (38) à un troisième élément résistif (56R) et une deuxième branche (58) raccordant la borne de commande (38A) du second interrupteur (38) à l'enroulement secondaire (L3) et comportant un élément capacitif (58C) destiné à être chargé à travers le troisième élément résistif (56R) et un élément de redressement (58D) monté en série avec l'élément capacitif (58C) de manière à ce que la charge de l'élément capacitif (58C) soit provoquée par une inversion de la tension (VS3) aux bornes de l'enroulement secondaire (L3).

10. Dispositif (10) selon l'une quelconque des revendications 1 à 9, comprenant un circuit de réaction (48) comprenant un élément capacitif (48C) et un élément résistif (48R) montés en série avec cet élément capacitif (48C) et dans lequel le circuit de réaction (48) raccorde la borne de commande (22A) l'interrupteur principal (22) à l'enroulement secondaire (L1).

11. Dispositif (10) selon l'une quelconque des revendications 1 à 10, dans lequel les moyens de commande en tension (34) de l'interrupteur principal (22) comprennent un circuit de commande (60) de la fermeture de l'interrupteur principal (22) destiné à être activé lors de l'ouverture du second interrupteur de commande (38).

12. Dispositif (10) selon la revendication 11, dans lequel le circuit de commande de la fermeture (60) relie la borne de commande (22A) de l'interrupteur principal (22) à l'enroulement secondaire (L3) et comporte un élément capacitif (60C) et un élément de redressement (60D) monté en série avec l'élément capacitif (60C), la charge de l'élément capacitif (60C) étant provoquée par une inversion de la tension aux bornes de l'enroulement secondaire (L3) et la décharge de l'élément capacitif (60C) par l'ouverture du second interrupteur de commande (38).

13. Dispositif (10) selon la revendication 12, dans lequel le circuit de commande de la fermeture (60) comprend en outre un élément résistif (60R1) monté en parallèle avec l'élément capacitif (60C) du circuit (60) de manière à ce que la vitesse de décharge de l'élément capacitif (60C) dépende de la valeur de l'élément résistif (60R1).

14. Dispositif (10) selon l'une quelconque des revendications 1 à 13, dans lequel l'interrupteur principal (22), les premier (36) et deuxième (38) interrupteurs de commande sont du type choisi parmi un transistor bipolaire et un transistor à effet de champ, la borne de commande du transistor bipolaire étant une base du transistor et la borne de commande du transistor à effet de champ étant une grille du transistor.

15. Dispositif (10) selon l'une quelconque des revendications 1 à 14, dans lequel le transformateur (14) comprend au moins deux enroulements secondaires (L1, L2, L3) et autant de circuits secondaires (S1, S2, S3) destinés à être chacun relié à une charge.

## Claims

1. Device (10) for generating a regulated output voltage (V1, V2, V3) from an input voltage (VE) originating from an electric power source, of the type comprising:
- an energy storage transformer (14) having magnetically coupled primary (P) and secondary (L1, L2, L3) windings,
- a primary circuit (20) linking the power source to a ground (M), comprising the primary winding (P) and a main solid-state switch (22) mounted in series,
- a secondary circuit (S1, S2, S3), intended to be linked to a load, comprising the secondary winding (L1, L2, L3),
- means (34) for controlling the voltage of the main solid-state switch (22) comprising a first control solid-state switch (36) linking a control terminal (22A) of the main solid-state switch (22) to the ground (M),
**characterized in that** the means (34) for controlling the voltage of the main solid-state switch (22) comprise a second control solid-state switch (38) linking the control terminal (22A) of the main solid-state switch (22) to the ground (M), the closure of the first control switch (36) triggering the closure of the second control switch (38), and the opening of the second control switch (38) being delayed relative to that of the first control switch (36), **in that** the control means (34) comprise a first circuit (40) for controlling the first solid-state switch (36) according to a first parameter dependent on the intensity of the current in the primary circuit (20) and **in that**
the first control switch (40) comprises a first leg (42) linking a control terminal (36A) of the first switch to a first resistive element (44) forming a shunt, the shunt (44) being mounted in the primary circuit (20) in series with the primary winding (P) and the main switch (22).

2. Device (10) according to Claim 1, in which the control parameter for the first switch (36) also depends on a correction voltage (VC) generated when a reference threshold voltage (V1Ref) is exceeded by the output voltage (V1) and/or on a variation of the output voltage (V1) when the output voltage (V1) remains below the reference threshold voltage (V1Ref).

3. Device (10) according to Claim 2, in which the first control circuit (40) also comprises a second leg (50) linking the control terminal (36A) of the first switch (36) to a second resistive element (52R) forming a shunt and supplying the correction voltage (VC) to its terminals.

4. Device (10) according to Claim 3, in which the control means (34) comprise a circuit (52) for generating a correction voltage (VC) for the output voltage (V1, V2, V3) connecting an output voltage (V1) generation terminal of the secondary circuit (S1) to the ground (M) and comprising the second shunt (52R) and a reference member (53) mounted in series with the second shunt (52R), this reference member (53) allowing a current to pass through the second shunt (52R) only when the reference threshold voltage (V1Ref) is exceeded by the output voltage (V1).

5. Device (10) according to Claim 4, in which the reference member (53) comprises a Zener diode (53Z) having a reverse voltage with the value substantially equal to the value of the reference threshold voltage (V1Ref).

6. Device (10) according to any one of Claims 1 to 5, in which the generation circuit (52) also comprises a member (52C) for limiting the variations of the output voltage (V1, V2, V3) when the output voltage (V1) remains lower than the reference threshold voltage (V1Ref), mounted in parallel with the reference member (53), this limiting member (52C) allowing a current to pass through the second shunt (52R) only on a variation of the output voltage (V1).

7. Device (10) according to any one of Claims 3 to 6, in which, the first (36) control switch and the reference member (53) being of the semiconductive junction type, the semiconductive junctions have thermal effects which are compensated.

8. Device (10) according to any one of Claims 1 to 7, in which the control means (34) comprise a second circuit (54) for controlling the second solid-state switch (38) according to a second parameter dependent on a reversal of the voltage at the terminals of the secondary winding (L3).

9. Device (10) according to Claim 8, in which the second control circuit (54) comprises a first leg (56) connecting a control terminal (38A) of the second switch (38) to a third resistive element (56R) and a second leg (58) connecting the control terminal (38A) of the second switch (38) to the secondary winding (L3) and including a capacitive element (58C) intended to be charged through the third resistive element (56R) and a rectifying element (58D) mounted in series with the capacitive element (58C) so that the charging of the capacitive element (58C) is provoked by a reversal of the voltage (VS3) at the terminals of the secondary winding (L3).

10. Device (10) according to any one of Claims 1 to 9, comprising a reaction circuit (48) comprising a capacitive element (48C) and a resistive element (48R) mounted in series with this capacitive element (48C) and in which the reaction circuit (48) connects the control terminal (22A) of the main switch (22) to the secondary winding (L1).

11. Device (10) according to any one of Claims 1 to 10, in which the means (34) for controlling the voltage of the main switch (22) comprise a control circuit (60) for controlling the closure of the main switch (22) intended to be activated upon the opening of the second control switch (38).

12. Device (10) according to Claim 11, in which the closure control circuit (60) links the control terminal (22A) of the main switch (22) to the secondary winding (L3) and includes a capacitive element (60C) and a rectifying element (60D) mounted in series with the capacitive element (60C), the charging of the capacitive element (60C) being provoked by a reversal of the voltage at the terminals of the secondary winding (L3) and the discharging of the capacitive element (60C) by the opening of the second control switch (38).

13. Device (10) according to Claim 12, in which the closure control circuit (60) also comprises a resistive element (60R1) mounted in parallel with the capacitive element (60C) of the circuit (60) so that the speed of discharge of the capacitive element (60C) depends on the value of the resistive element (60R1).

14. Device (10) according to any one of Claims 1 to 13, in which the main switch (22), the first (36) and second (38) control switches are of the type chosen from a bipolar transistor and a field effect transistor, the control terminal of the bipolar transistor being a base of the transistor and the control terminal of the field effect transistor being a gate of the transistor.

15. Device (10) according to any one of Claims 1 to 14, in which the transformer (14) comprises at least two secondary windings (L1, L2, L3) and as many secondary circuits (S1, S2, S3) each intended to be linked to a load.

## Patentansprüche

1. Vorrichtung (10) zum Erzeugen einer regulierten Ausgangsspannung (V1, V2, V3) anhand einer Eingangsspannung (VE), die von einer Stromversorgungsquelle stammt, des Typs, der umfasst:
- einen Transformator (14) zum Speichern von Energie, der Primär- (P) und Sekundärwicklungen (L1, L2, L3), die magnetisch miteinander gekoppelt sind, enthält,
- eine Primärschaltung (20), die die Versorgungsquelle mit einer Masse (M) verbindet und die Primärwicklung (P) sowie einen statischen Hauptunterbrecher (22), die in Reihe geschaltet sind, enthält,
- eine Sekundärschaltung (S1, S2, S3), die dazu bestimmt ist, mit einer Last verbunden zu werden, und die Sekundärwicklung (L1, L2, L3) enthält,
- Mittel (34) zum Steuern der Spannung des statischen Hauptunterbrechers (22), die einen ersten statischen Steuerunterbrecher (36) enthalten, der einen Steueranschluss (22A) des statischen Hauptunterbrechers (22) mit Masse (M) verbindet,
**dadurch gekennzeichnet, dass** die Mittel (34) zum Steuern der Spannung des statischen Hauptunterbrechers (22) einen zweiten statischen Steuerunterbrecher (38) enthalten, der den Steueranschluss (22A) des statischen Hauptunterbrechers (22) mit Masse (M) verbindet, wobei das Schließen des ersten Steuerunterbrechers (36) das Schließen des zweiten Steuerunterbrechers (38) auslöst und das Öffnen des zweiten Steuerunterbrechers (38) in Bezug auf das Öffnen des ersten Steuerunterbrechers (36) verzögert ist, dass
die Steuermittel (34) eine erste Schaltung (40) zum Steuern des ersten statischen Unterbrechers (36) als Funktion eines ersten Parameters, der von der Stromstärke in der Primärschaltung (20) abhängt, enthalten, und dass
die erste Steuerschaltung (40) einen ersten Zweig (42) enthält, der einen Steueranschluss (36A) des ersten Unterbrechers mit einem ersten resistiven Element (44), das eine Nebenleitung bildet, verbindet, wobei die Nebenleitung (44) in der Primärschaltung (20) mit der Primärwicklung (P) und mit dem Hauptunterbrecher (22) in Reihe geschaltet ist.

2. Vorrichtung (10) nach Anspruch 1, wobei der Steuerparameter des ersten Unterbrechers (36) außerdem von einer Korrekturspannung (VC) abhängt, die erzeugt wird, wenn die Ausgangsspannung (V1) eine Referenzschwellenspannung (V1Ref) übersteigt und/oder wenn sich die Ausgangsspannung (V1) ändert, wenn die Ausgangsspannung (V1) kleiner als die Referenzschwellenspannung (V1Ref) bleibt.

3. Vorrichtung (10) nach Anspruch 2, wobei die erste Steuerschaltung (40) außerdem einen zweiten Zweig (50) enthält, der den Steueranschluss (36A) des ersten Unterbrechers (36) mit einem zweiten resistiven Element (52R), das eine Nebenleitung bildet, verbindet und an seinen Anschlüssen die Korrekturspannung (VC) liefert.

4. Vorrichtung (10) nach Anspruch 3, wobei die Steuermittel (34) eine Schaltung (52) zum Erzeugen einer Korrekturspannung (VC) der Ausgangsspannung (V1, V2, V3) enthalten, die einen Anschluss für die Erzeugung der Ausgangsspannung (V1) der Sekundärschaltung (S1) mit Masse (M) verbindet und die zweite Nebenleitung (52R) sowie ein Referenzorgan (53), das mit der zweiten Nebenleitung (52R) in Reihe geschaltet ist, enthält, wobei dieses Referenzorgan (53) einen Strom durch die zweite Nebenleitung (52R) nur dann durchlässt, wenn die Ausgangsspannung (V1) die Referenzschwellenspannung (V1Ref) übersteigt.

5. Vorrichtung (10) nach Anspruch 4, wobei das Referenzorgan (53) eine Zener-Diode (53Z) enthält, die eine inverse Spannung mit einem Wert besitzt, der im Wesentlichen gleich dem Wert der Referenzschwellenspannung (V1Ref) ist.

6. Vorrichtung (10) nach einem der Ansprüche 1 bis 5, wobei die Erzeugungsschaltung (52) außerdem ein Organ (52C) für die Begrenzung der Veränderungen der Ausgangsspannung (V1, V2, V3), wenn die Ausgangsspannung (V1) unter der Referenzschwellenspannung (V1Ref) bleibt, enthält, das zu dem Referenzorgan (53) parallelgeschaltet ist, wobei dieses Begrenzungsorgan (52C) einen Strom durch die zweite Nebenleitung (52R) nur dann durchlässt, wenn sich die Ausgangsspannung (V1) ändert.

7. Vorrichtung (10) nach einem der Ansprüche 3 bis 6, wobei der erste Steuerunterbrecher (36) und das Referenzorgan (53) vom Typ mit Halbleiterübergang sind, wobei die Halbleiterübergänge thermische Effekte haben, die sich kompensieren.

8. Vorrichtung (10) nach einem der Ansprüche 1 bis 7, wobei die Steuermittel (34) eine zweite Schaltung (54) zum Steuern des zweiten statischen Unterbrechers (38) als Funktion eines zweiten Parameters, der von einer Inversion der Spannung an den Anschlüssen der Sekundärwicklung (L3) abhängt, umfassen.

9. Vorrichtung (10) nach Anspruch 8, wobei die zweite Steuerschaltung (54) einen ersten Zweig (56), der einen Steueranschluss (38A) des zweiten Unterbrechers (38) mit einem dritten resistiven Element (56R) verbindet, und einen zweiten Zweig (58), der den Steueranschluss (38A) des zweiten Unterbrechers (38) mit der Sekundärwicklung (L3) verbindet und ein kapazitives Element (58C), das dazu bestimmt ist, über das dritte resistive Element (56R) geladen zu werden, und ein Gleichrichterelement (58D), das mit dem kapazitiven Element (58C) in Reihe geschaltet ist, enthält, derart, dass die Ladung des kapazitiven Elements (58C) durch eine Inversion der Spannung (VS3) an den Anschlüssen der Sekundärwicklung (L3) hervorgerufen wird, umfasst.

10. Vorrichtung (10) nach einem der Ansprüche 1 bis 9, die eine Rückkopplungsschaltung (48) umfasst, die ein kapazitives Element (48C) und ein resistives Element (48R), das mit diesem kapazitiven Element (48C) in Reihe geschaltet ist, enthält, wobei die Rückkopplungsschaltung (48) den Steueranschluss (22A) des Hauptunterbrechers (22) mit der Sekundärwicklung (L1) verbindet.

11. Vorrichtung (10) nach einem der Ansprüche 1 bis 10, wobei die Spannungssteuermittel (34) des Hauptunterbrechers (22) eine Steuerschaltung (60) zum Schließen des Hauptunterbrechers (22) umfassen, die dazu bestimmt ist, beim Öffnen des zweiten Steuerunterbrechers (38) aktiviert zu werden.

12. Vorrichtung (10) nach Anspruch 11, wobei die Schließsteuerschaltung (60) den Steueranschluss (22A) des Hauptunterbrechers (22) mit der Sekundärwicklung (L3) verbindet und ein kapazitives Element (60C) sowie ein Gleichrichterelement (60D), das mit dem kapazitiven Element (60C) in Reihe geschaltet ist, enthält, wobei die Ladung des kapazitiven Elements (60C) durch Inversion der Spannung an den Anschlüssen der Sekundärwicklung (L3) hervorgerufen wird und die Entladung des kapazitiven Elements (60C) durch Öffnen des zweiten Steuerunterbrechers (38) hervorgerufen wird.

13. Vorrichtung (10) nach Anspruch 12, wobei die Schließsteuerschaltung (60) außerdem ein resistives Element (60R1) umfasst, das zu dem kapazitiven Element (60C) der Schaltung (60) parallelgeschaltet ist, derart, dass die Entladegeschwindigkeit des kapazitiven Elements (60C) von dem Wert des resistiven Elements (60R1) abhängt.

14. Vorrichtung (10) nach einem der Ansprüche 1 bis 13, wobei der Hauptunterbrecher (22), der erste (36) und der zweite (38) Steuerunterbrecher von dem Typ sind, der aus einem Bipolartransistor und einem Feldeffekttransistor gewählt ist, wobei der Steueranschluss des Bipolartransistors eine Basis des Transistors ist und der Steueranschluss des Feldeffekttransistors ein Gate des Transistors ist.

15. Vorrichtung (10) nach einem der Ansprüche 1 bis 14, wobei der Transformator (14) wenigstens zwei Sekundärwicklungen (L1, L2, L3) und ebenso viele Sekundärschaltungen (S1, S2, S3), die dazu bestimmt sind, jeweils mit einer Last verbunden zu werden, umfasst.
